# EUROPEAN PATENT APPLICATION

(11) **EP 4 814 071 A1**
(43) Date of publication of application: **30.09.2026**
(21) Application number: 25221141.2
(22) Date of filing: 05.12.2025
(51) Int. Cl.: C09G 1/02, C09K 3/14

(54) **POLISHING COMPOSITION**

(30) Priority: 28.03.2025 JP 2025056440
(71) Applicant: Fujimi Incorporated, Kiyosu-shi, Aichi 452-8502 (JP)
(72) Inventor: Yamato, Yasuyuki, Kiyosu-shi, Aichi, 452-8502 (JP); Suzuki, Shota, Kiyosu-shi, Aichi, 452-8502 (JP)
(74) Representative: Grünecker Patent- und Rechtsanwälte PartG mbB

(57) **Abstract**

A technical problem to be solved is to provide a novel polishing composition that ensures the polishing removal rate for a film having silicon-silicon bonds such as polysilicon at or above a certain level, increases the ratio of the polishing removal rate for the film having silicon-silicon bonds such as polysilicon to the polishing removal rate for an insulating film such as a film having oxygen-silicon bonds being a function as a stopper layer, and at the same time, can suppress the above-described micro-scratches.

A polishing composition comprising: colloidal silica having the number of silanol groups of more than 2 groups/nm² and less than 6 groups/nm²; a nitrogen-containing basic compound; and a liquid carrier, wherein, when a concentration of the colloidal silica is 1.5% by mass, a transmittance when transmitting light having a wavelength of 450 nm is more than 1.10% and less than 100%, and the polishing composition has a pH of 9.0 to 11.5.

## Description

### TECHNICAL FIELD

The present disclosure relates to a polishing composition.

### BACKGROUND ART

In the CMP field, there are some cases where an insulating film such as a film having oxygen-silicon bonds, including a silicon dioxide film, provided with recesses, and a film having silicon-silicon bonds, such as polysilicon, formed so as to be embedded in the recesses, are arranged, and polishing is carried out using the insulating film having oxygen-silicon bonds, such as silicon dioxide, as a stopper film. As an index indicating how easily the film having silicon-silicon bonds is polished relative to the insulating film such as a film having oxygen-silicon bonds, a selectivity is used, which is the ratio of the rate for the film having silicon-silicon bonds to be polished and the rate for the insulating film to be polished such as a film having oxygen-silicon bonds.

In order for the insulating film having oxygen-silicon bonds to function as a stopper layer, a larger selectivity is favorable. For example, Patent Literature 1 aims to provide a polishing composition that achieves a large selectivity while reducing the occurrence of surface defects, and discloses a polishing composition that comprises a polishing material such as silicon dioxide and water, and may further comprise a basic organic compound such as tetramethylammonium hydroxide or piperazine.

### Citation List

### Patent Literature

Patent Literature 1: Japanese Patent Laid-Open No. 10-321569

### SUMMARYDISCLOSURE

### Technical Problem

The present inventors found that, when applying a polishing composition that increases the ratio of the rate for the film having silicon-silicon bonds to be polished to the rate for the insulating film to be polished such as a film having oxygen-silicon bonds (selectivity), as disclosed in Patent Literature 1, there is a problem that, particularly, scratches occur in the polished object such as a film having oxygen-silicon bonds, including silicon dioxide, and in particular, so-called micro-scratches, which cannot be detected without performing a special treatment, increase.

Therefore, a technical problem to be solved is to provide a novel polishing composition that ensures the polishing removal rate for a film having silicon-silicon bonds such as polysilicon at or above a certain level in order to secure productivity, increases the ratio of the polishing removal rate for the film having silicon-silicon bonds such as polysilicon to the polishing removal rate for an insulating film such as a film having oxygen-silicon bonds being a function as a stopper layer, and at the same time, can suppress the above-described micro-scratches.

### Solution to Problem

One aspect of the present disclosure is a polishing composition comprising: colloidal silica having the number of silanol groups of more than 2 groups/nm² and less than 6 groups/nm²; a nitrogen-containing basic compound; and a liquid carrier, wherein, when a concentration of the colloidal silica is 1.5% by mass, a transmittance when transmitting light having a wavelength of 450 nm is more than 1.10% and less than 100%, and the polishing composition has a pH of 9.0 to 11.5.

### Effect of the Disclosure

According to the present disclosure, there can be provided a novel polishing composition that ensures the polishing removal rate for a film having silicon-silicon bonds such as polysilicon at or above a certain level, increases the ratio of the polishing removal rate for the film having silicon-silicon bonds such as polysilicon to the polishing removal rate for an insulating film such as a film having oxygen-silicon bonds being a function as a stopper layer, and at the same time, can suppress the above-described micro-scratches.

### BRIEF DESCRIPTION OF THE DRAWINGS

FIG. 1 is a schematic cross-sectional view of an object to be polished before polishing; and
FIG. 2 is a schematic cross-sectional view of the polished object after ideal polishing.

### DESCRIPTION OF EMBODIMENTS

In the present specification, the expression "X to Y" is used in the sense that it includes the numerical values listed before and after it (X and Y) as the lower limit value and the upper limit value, and means "X or more and Y or less". In the case where "X to Y" is listed more than once, for example, if "X1 to Y1, or X2 to Y2" or "X1 or more and Y1 or less, or X2 or more and Y2 or less" is described, the disclosure of each numerical value as the upper limit, the disclosure of each numerical value as the lower limit, and the combination of those upper and lower limits are all disclosed (that is, they serve as the lawful basis for amendment). Specifically, amendment with X1 or more, amendment with Y2 or less, amendment with X1 or less, amendment with Y2 or more, amendment with X1 to X2, amendment with X1 to Y2, and others must all be considered lawful. Note that the expression "X or more" means X or more than X, and thus includes the meaning of "more than X". Similarly, the expression "Y or less" means Y or less than Y, and thus includes the meaning of "less than Y". Also, unless otherwise specified, operations and measurements of physical properties or other factors are carried out under conditions of room temperature (20 to 25°C)/relative humidity of 40 to 50% RH. Note that the concentration described in the present specification may be the concentration at the point of use (POU) or may be the concentration prior to dilution to the concentration at the POU. The dilution factor may be 2 to 10 times. In addition, all combinations of the embodiments and descriptions disclosed in the present specification must be understood to be disclosed in the present application. That is, they must be understood as potentially serving as a basis for amendment. Also, when the content or concentration of each component is described, if two or more types are contained, it may refer to the total amount thereof.

### <Polishing Composition>

One aspect of the present disclosure is a polishing composition comprising: colloidal silica having the number of silanol groups of more than 2 groups/nm² and less than 6 groups/nm²; a nitrogen-containing basic compound; and a liquid carrier, wherein, when a concentration of the colloidal silica is 1.5% by mass, a transmittance when transmitting light having a wavelength of 450 nm, is more than 1.10% and less than 100%, and the polishing composition has a pH of 9.0 to 11.5. According to such an aspect, there can be provided a novel polishing composition that ensures the polishing removal rate for a film having silicon-silicon bonds such as polysilicon at or above a certain level, increases the ratio of the polishing removal rate for the film having silicon-silicon bonds such as polysilicon to the polishing removal rate for a film having oxygen-silicon bonds or the like being a function as a stopper layer, and at the same time, can suppress the above-described micro-scratches. Another aspect of the present disclosure is a polishing composition comprising: colloidal silica having the number of silanol groups of more than 2 groups/nm² and less than 6 groups/nm²; a nitrogen-containing basic compound; and a liquid carrier, wherein the colloidal silica has an average primary particle size of more than 1 nm and less than 55 nm, and the polishing composition has a pH of 9.0 to 11.5.

### [Abrasive Grains]

The polishing composition according to one aspect of the present disclosure comprises colloidal silica as abrasive grains. The abrasive grains have the action of mechanically polishing an object to be polished. The colloidal silica can be produced by a sol-gel method. For example, it can be obtained by using a hydrolyzable silicon compound (for example, an alkoxysilane or a derivative thereof) as a raw material, and subjecting it to hydrolysis and condensation reactions.

According to one embodiment of the present disclosure, the colloidal silica has the number of silanol groups of more than 2 groups/nm² and less than 6 groups/nm². As a method for controlling the number of silanol groups of the colloidal silica to be more than 2 groups/nm² and less than 6 groups/nm², it can be set within the desired range by adjusting the conditions of the hydrolysis and condensation reactions of the alkoxysilane and the conditions of subsequent treatments. According to one embodiment of the present disclosure, the number of silanol groups of the colloidal silica is 2.1 groups/nm² or more, 2.3 groups/nm² or more, 2.5 groups/nm² or more, 2.7 groups/nm² or more, 2.9 groups/nm² or more, 3.1 groups/nm² or more, 3.3 groups/nm² or more, 3.5 groups/nm² or more, 3.7 groups/nm² or more, 3.9 groups/nm² or more, 4 groups/nm² or more, more than 4 groups/nm², 4.1 groups/nm² or more, 4.3 groups/nm² or more, 4.5 groups/nm² or more, 4.7 groups/nm² or more, 4.9 groups/nm² or more, 5.1 groups/nm² or more, or 5.3 groups/nm² or more. According to one embodiment of the present disclosure, the number of silanol groups of the colloidal silica is less than 6.0 groups/nm², 5.9 groups/nm² or less, 5.8 groups/nm² or less, less than 5.8 groups/nm², 5.7 groups/nm² or less, 5.6 groups/nm² or less, less than 5.6 groups/nm², less than 5.0 groups/nm², less than 4.6 groups/nm², less than 4.2 groups/nm², less than 3.8 groups/nm², less than 3.6 groups/nm², or less than 3.4 groups/nm².

The silanol group density of silica particles can be obtained using silica particles before being mixed with other components to prepare a polishing solution (polishing composition) or using silica particles sampled from a polishing solution. Based on the fact that the change in the silanol group density of silica particles before and after preparation of a polishing solution is small, it may be a silanol group density of silica particles before preparation of a polishing solution or a silanol group density of silica particles sampled from a polishing solution.

According to one embodiment of the present disclosure, the colloidal silica has a pulse-NMR specific surface area of more than 40 m²/g. According to one embodiment of the present disclosure, the colloidal silica has a pulse-NMR specific surface area of 42.0 m²/g or more, 44.0 m²/g or more, 46.0 m²/g or more, 48.0 m²/g or more, 50.0 m²/g or more, 52.0 m²/g or more, 54.0 m²/g or more, 56.0 m²/g or more, 58.0 m²/g or more, 60.0 m²/g or more, 62.0 m²/g or more, 64.0 m²/g or more, 66.0 m²/g or more, or 68.0 m²/g or more. According to one embodiment of the present disclosure, the colloidal silica has a pulse-NMR specific surface area of 90.0 m²/g or less, 80.0 m²/g or less, 75.0 m²/g or less, or 70.0 m²/g or less. According to one embodiment of the present disclosure, the colloidal silica has a pulse-NMR specific surface area of more than 40.0 m²/g and 90.0 m²/g or less. The method for measuring the pulse-NMR specific surface area of the abrasive grains (particularly colloidal silica) is according to the method described in the Examples. The pulse-NMR specific surface area of the colloidal silica is determined by measurement of an condition in which the relaxation rate for proton resonance changes depending on the amount of molecules adsorbed on the solid surface or other factors, and can thus be controlled by the increase or decrease in the number of protons of surface functional groups of the colloidal silica.

According to one embodiment of the present disclosure, the lower limit of the average primary particle size of the abrasive grains (particularly colloidal silica) is more than 1 nm, 3 nm or more, 5 nm or more, 7 nm or more, 9 nm or more, 11 nm or more, more than 12 nm, 13 nm or more, 15 nm or more, 17 nm or more, 19 nm or more, 21 nm or more, 23 nm or more, 25 nm or more, 27 nm or more, or 29 nm or more. According to one embodiment of the present disclosure, the upper limit of the average primary particle size of the abrasive grains (particularly colloidal silica) is less than 55 nm, 53 nm or less, 51 nm or less, 49 nm or less, 47 nm or less, 45 nm or less, 43 nm or less, 41 nm or less, 39 nm or less, 37 nm or less, 35 nm or less, 33 nm or less, 31 nm or less, 25 nm or less, 20 nm or less, 15 nm or less, 14 nm or less, or 13 nm or less. According to one embodiment of the present disclosure, the average primary particle size of the abrasive grains (particularly colloidal silica) is more than 1 nm and less than 55 nm. The method for measuring the average primary particle size is according to the method described in the Examples.

According to one embodiment of the present disclosure, the lower limit of the average secondary particle size of the abrasive grains (particularly colloidal silica) is 15 nm or more, 20 nm or more, 25 nm or more, 30 nm or more, 35 nm or more, 40 nm or more, 45 nm or more, 50 nm or more, 55 nm or more, 60 nm or more, or 65 nm or more. According to one embodiment of the present disclosure, the upper limit of the average secondary particle size of the abrasive grains (particularly colloidal silica) is 150 nm or less, 140 nm or less, 130 nm or less, 120 nm or less, 110 nm or less, 100 nm or less, 90 nm or less, 80 nm or less, 70 nm or less, 60 nm or less, 50 nm or less, 40 nm or less, or 25 nm or less. According to one embodiment of the present disclosure, the average secondary particle size of the abrasive grains (particularly colloidal silica) is 15 nm or more and 150 nm or less. The method for measuring the average primary particle size is according to the method described in the Examples. The method for measuring the average secondary particle size is according to the method described in the Examples.

According to one embodiment of the present disclosure, the average degree of association (average secondary particle size (nm)/average primary particle size (nm)) of the abrasive grains (particularly colloidal silica) is 1.1 or more, 1.2 or more, 1.3 or more, 1.4 or more, 1.5 or more, 1.6 or more, 1.7 or more, 1.8 or more, 1.9 or more, 2.0 or more, 2.1 or more, 2.2 or more, 2.3 or more, 2.4 or more, or 2.5 or more. According to one embodiment of the present disclosure, the average degree of association (average secondary particle size/average primary particle size) of the abrasive grains (particularly colloidal silica) is 4.6 or less, 4.4 or less, 4.2 or less, 4.0 or less, 3.8 or less, 3.6 or less, 3.4 or less, 3.2 or less, 3.0 or less, 2.9 or less, 2.8 or less, 2.7 or less, 2.6 or less, 2.5 or less, or 2.4 or less.

According to one embodiment of the present disclosure, although there is no particular restriction on the lower limit of D90/D10, which is the ratio of the diameter of particles where the cumulative particle mass from the finer particle side reaches 90% of the entire particle mass (D90) to the diameter of particles where the cumulative particle mass reaches 10% of the entire particle mass of the entire particles (D10), in a particle size distribution of the abrasive grains (particularly colloidal silica) determined by a dynamic light scattering method, it is preferably 1.1 or more, more preferably 1.4 or more, still more preferably 1.7 or more, and most preferably 2.0 or more. In addition, although there is no particular restriction on the upper limit of D90/D10, which is the ratio of the diameter of particles where the cumulative particle mass from the finer particle side reaches 90% of the entire particle mass (D90) to the diameter of particles where the cumulative particle mass reaches 10% of the entire particle mass of the entire particles (D10), in a particle size distribution of the abrasive grains (particularly colloidal silica) in the polishing composition determined by a dynamic light scattering method, it is preferably 3.0 or less, more preferably 2.7 or less, still more preferably 2.5 or less, and may be 2.4 or less, 2.3 or less, or 2.2 or less. Within such a range, it is possible to achieve both an improvement in the polishing removal rate and a reduction in defects on the surface of the object to be polished.

According to one embodiment of the present disclosure, the content ratio of the abrasive grains (particularly colloidal silica) in the polishing composition is 0.01% by mass or more, 0.05% by mass or more, 0.1% by mass or more, 0.5% by mass or more, 0.6% by mass or more, 0.7% by mass or more, 0.8% by mass or more, 0.9% by mass or more, 1.0% by mass or more, 1.1% by mass or more, 1.2% by mass or more, 1.3% by mass or more, or 1.4% by mass or more. According to one embodiment of the present disclosure, the content ratio of the abrasive grains (particularly colloidal silica) in the polishing composition is 10% by mass or less, 5% by mass or less, 4% by mass or less, 3.5% by mass or less, 3% by mass or less, 2.5% by mass or less, or 2% by mass or less. According to one embodiment of the present disclosure, the content ratio of the abrasive grains (particularly colloidal silica) in the polishing composition is 0.01% by mass or more and 10% by mass or less.

According to one embodiment of the present disclosure, among the abrasive grains contained in the polishing composition, the colloidal silica is 90% by mass or more, 95% by mass or more, 98% by mass or more, 99% by mass or more, 99.5% by mass or more, or 99.9% by mass or more (the upper limit being 100% by mass).

According to one embodiment of the present disclosure, the surface of the abrasive grains (particularly colloidal silica) contained in the polishing composition is not subjected to a treatment in which a treating agent such as an organic acid (for example, sulfonic acid or carboxylic acid) is chemically bonded.

According to one embodiment of the present disclosure, when the concentration of the abrasive grains (particularly colloidal silica) contained in the polishing composition is 1.5% by mass, the transmittance of the polishing composition when transmitting light having a wavelength of 450 nm is more than 1.10% and less than 100%. According to such an embodiment, there can be provided a novel polishing composition that ensures the polishing removal rate for a film having silicon-silicon bonds such as polysilicon at or above a certain level in order to secure productivity, increases the ratio of the polishing removal rate of the film having silicon-silicon bonds such as polysilicon to the polishing removal rate of an insulating film such as a film having oxygen-silicon bonds being a function as a stopper layer, and at the same time, can suppress the above-described micro-scratches. As a method for adjusting the transmittance to the above range, for example, a method in which the particle size of the colloidal silica is regulated and a method in which the electrical conductivity is regulated can be exemplified.

According to one embodiment of the present disclosure, the transmittance is 5.00% or more, 10.00% or more, 15.00% or more, 20.00% or more, 25.00% or more, 30.00% or more, 31.00% or more, 35.00% or more, more than 37.00%, 40.00% or more, more than 40.00%, 45.00% or more, 50.00% or more, 55.00% or more, 60.00% or more, or 65.00% or more. According to one embodiment of the present disclosure, the transmittance is 95.00% or less, less than 92.00%, 90.00% or less, 85.00% or less, 80.00% or less, 75.00% or less, 70.00% or less, 65.00% or less, 60.00% or less, 55.00% or less, 50.00% or less, 45.00% or less, 40.00% or less, 39.00% or less, or 35.00% or less.

Here, when the abrasive grain concentration in the polishing composition is not 1.5% by mass, adjustment of the abrasive grain concentration to 1.5% by mass can be carried out as follows. That is, when the abrasive grain concentration in the polishing composition is more than 1.5% by mass, an appropriate amount of water can be added so that the abrasive grain concentration becomes 1.5% by mass. When the abrasive grain concentration in the polishing composition is less than 1.5% by mass, the polishing composition may be stored in an environment of 25 to 40°C until the abrasive grain concentration becomes 1.5% by mass, or may be subjected to a treatment such as ultrafiltration.

### [Nitrogen-Containing Basic Compound]

The polishing composition according to one aspect of the present disclosure comprises a nitrogen-containing basic compound as an alkaline component. According to such a configuration, there can be provided a novel polishing composition that ensures the polishing removal rate for a film having silicon-silicon bonds such as polysilicon at or above a certain level in order to secure productivity, increases the ratio of the polishing removal rate for the film having silicon-silicon bonds such as polysilicon to the polishing removal rate for an insulating film such as a film having oxygen-silicon bonds being a function as a stopper layer, and at the same time, can suppress the above-described micro-scratches. Here, the paragraph "0014" of Japanese Patent Laid-Open No. 2007-103514 describes that "Alkali in the polishing composition plays a role in chemically polishing the SiO₂ film and contributes to an improvement in the polishing removal rate for the SiO₂ film by the polishing composition. The alkali contained in the polishing composition is ammonia, an ammonium salt, an alkali metal salt, or an alkali metal hydroxide. The ammonium salt contained in the polishing composition may be, for example, ammonium carbonate, and the alkali metal salt contained in the polishing composition may be, for example, an alkali metal carbonate. Also, the alkali metal hydroxide contained in the polishing composition may be sodium hydroxide, sodium hydroxide, or lithium hydroxide. However, when the alkali contained in the polishing composition is a compound other than ammonia, an ammonium salt, an alkali metal salt, or an alkali metal hydroxide, such as tetramethylammonium hydroxide (TMAH), the polishing removal rate for the SiO₂ film by the polishing composition does not improve very much. Therefore, when the SiO₂ film is polished using the polishing composition, scratches occurring on the surface of the SiO₂ film greatly increase". As described above, conventionally, alkali has been considered to have the function of improving the polishing removal rate for the SiO₂ film. It has also been considered that when TMAH is used, scratches occurring on the surface of the SiO₂ film greatly increase. In the present disclosure, it was completely unexpected that, by combining a configuration that "colloidal silica having the number of silanol groups of more than 2 groups/nm² and less than 6 groups/nm², and a liquid carrier are contained, wherein, when the concentration of the colloidal silica is 1.5% by mass, the transmittance when transmitting light having a wavelength of 450 nm is more than 1.10% and less than 100%, or the colloidal silica has an average primary particle size of more than 1 nm and less than 55 nm, and the polishing composition has a pH of 9.0 to 11.5" with "a nitrogen-containing basic compound", there would be an effect of reducing the polishing removal rate for a film having oxygen-silicon bonds and further suppressing the occurrence of micro-scratches.

The alkali component is a compound that, when added to the polishing composition, has the function of raising the pH relative to before addition. The nitrogen-containing basic compound is a compound that contains a nitrogen atom in the molecule, and when added to the polishing composition, has the function of raising the pH relative to before addition. Note that, in the present specification, the nitrogen-containing basic compound may be a concept excluding the antiseptic agent described later in order to avoid overlap with it. The nitrogen-containing basic compound may also be recognized as a pH adjusting agent.

According to one embodiment of the present disclosure, the concentration of the nitrogen-containing basic compound in the polishing composition is an appropriate amount for adjusting the polishing composition to a predetermined pH (particularly a pH of 9.0 to 11.5).

According to one embodiment of the present disclosure, the concentration of the nitrogen-containing basic compound in the polishing composition is 0.0001% by mass or more, 0.0005% by mass or more, 0.001% by mass or more, 0.003% by mass or more, 0.005% by mass or more, 0.009% by mass or more, 0.01% by mass or more, 0.011% by mass or more, 0.013% by mass or more, 0.015% by mass or more, 0.019% by mass or more, 0.021% by mass or more, 0.023% by mass or more, 0.025% by mass or more, 0.027% by mass or more, or 0.029% by mass or more. According to one embodiment of the present disclosure, the concentration of the nitrogen-containing basic compound in the polishing composition is 3.0% by mass or less, 1.0% by mass or less, 0.8% by mass or less, 0.6% by mass or less, 0.4% by mass or less, 0.2% by mass or less, 0.1% by mass or less, 0.09% by mass or less, 0.08% by mass or less, 0.06% by mass or less, 0.05% by mass or less, 0.04% by mass or less, 0.03% by mass or less, or 0.02% by mass or less. According to one embodiment of the present disclosure, the concentration of the nitrogen-containing basic compound in the polishing composition is 0.001% by mass or more and 3.0% by mass or less.

According to one embodiment of the present disclosure, the nitrogen-containing basic compound is an organic alkali agent. The organic alkali agent is a compound that contains an organic group (carbon skeleton) in the molecule and exhibits basicity.

According to one embodiment of the present disclosure, the nitrogen-containing basic compound comprises at least one selected from the group consisting of a quaternary ammonium salt, an alkanolamine, a nitrogen-containing heterocyclic compound, and ammonia.

In one embodiment of the present disclosure, the quaternary ammonium salt is a compound represented by N(R¹)(R²)(R³)(R⁴), wherein R¹ to R⁴ may be each independently an alkyl group having 1 to 18 carbon atoms, 1 to 15 carbon atoms, 1 to 10 carbon atoms, or 1 to 5 carbon atoms. The counter anion in the quaternary ammonium salt may be, for example, a hydroxide ion, a carbonate ion, or a halide ion.

According to one embodiment of the present disclosure, R¹ to R⁴ are each independently an alkyl group having 1 or more carbon atoms, 2 or more carbon atoms, or 3 or more carbon atoms. According to one embodiment of the present disclosure, R¹ to R⁴ are each independently an alkyl group having 4 or less carbon atoms, 3 or less carbon atoms, or 2 or less carbon atoms. According to one embodiment of the present disclosure, R¹ to R⁴ are each independently an alkyl group having 1 or more and 4 or less carbon atoms.

In one embodiment of the present disclosure, the alkyl group having 1 to 18 carbon atoms may be linear or branched, and examples thereof include a methyl group, an ethyl group, a propyl group, an isopropyl group, a butyl group, an isobutyl group, a sec-butyl group, a tert-butyl group, a hexyl group, an octyl group, and a dodecyl group. However, from the viewpoint of efficiently exhibiting the intended effects of the present disclosure, it is preferable that the alkyl group is linear. According to one embodiment of the present disclosure, the quaternary ammonium salt may be tetraalkylammonium hydroxide such as tetramethylammonium hydroxide, tetraethylammonium hydroxide, and tetrabutylammonium hydroxide; tetraalkylammonium carbonates such as tetramethylammonium carbonate; or tetraalkylammonium chlorides such as tetramethylammonium chloride. The explanation for the alkyl groups of R¹ to R⁴ is applicable to the description for the "alkyl" in the present embodiment.

In one embodiment of the present disclosure, the alkanolamine is a compound represented by N(R⁵)(R⁶)(R⁷), wherein R⁵ to R⁷ are each independently a hydrogen atom, or an alkyl group having 1 to 18 carbon atoms, 1 to 15 carbon atoms, 1 to 10 carbon atoms, 1 to 5 carbon atoms, or 1, 2, 3, 4, or 5 carbon atoms, which is optionally substituted with a hydroxy group, and at least one of the alkyl groups of R⁵ to R⁷ is substituted with a hydroxy group. The above explanation is applicable to the alkyl group having 1 to 18 carbon atoms. Examples of the alkyl group substituted with a hydroxy group include those in which at least one hydrogen atom of the alkyl group is replaced with a hydroxy group.

In one embodiment of the present disclosure, the above R⁵ to R⁷ are each independently a hydrogen atom, or an alkoxyalkyl group having 2 to 18 carbon atoms, 2 to 15 carbon atoms, 2 to 10 carbon atoms, 2 to 5 carbon atoms, or 2, 3, 4, or 5 carbon atoms, which is optionally substituted with a hydroxy group, and at least one of the alkoxyalkyl groups of R⁵ to R⁷ is substituted with a hydroxy group. Examples of the alkoxyalkyl group having 2 to 18 carbon atoms include a methoxymethyl group, a methoxyethyl group, an ethoxymethyl group, an ethoxyethyl group, a propoxyethyl group, a methoxybutyl group, a butoxybutyl group, a pentoxybutyl group, a hexyloxyethyl group, an octyloxyethyl group, a nonyloxybutyl group, and a dodecyloxyethyl group. Examples of the alkoxyalkyl group substituted with a hydroxy group include those in which at least one hydrogen atom of the alkoxyalkyl group is replaced with a hydroxy group.

Examples of the alkanolamine include monoethanolamine, diethanolamine, triethanolamine, N,N-dimethylethanolamine, N,N-diethylethanolamine, and 2-(2-aminoethoxy)ethanol. Note that the present inventors have found that, when 2-(2-aminoethoxy)ethanol is used as the nitrogen-containing basic compound, results comparable to those of Example 7 or Example 8 can be obtained.

According to one embodiment of the present disclosure, the nitrogen-containing heterocyclic compound is a saturated nitrogen-containing heterocyclic compound. According to one embodiment of the present disclosure, the nitrogen-containing heterocyclic compound may be 5-membered rings or 6-membered rings. According to one embodiment of the present disclosure, the nitrogen-containing heterocyclic compound contains only nitrogen atom as a heteroatom. According to one embodiment of the present disclosure, examples of the saturated nitrogen-containing heterocyclic compound include anhydrous piperazine and piperazine hexahydrate. According to one embodiment of the present disclosure, examples of the saturated nitrogen-containing heterocyclic compound include N-substituted piperazines substituted with at least one alkyl group, N-substituted piperazines substituted with at least one aminoalkyl group, and N-substituted piperazines substituted with at least one acyl group. Examples of the alkyl group as a substituent for the N-substituted piperazines include an alkyl group having 1 to 18 carbon atoms, 1 to 15 carbon atoms, 1 to 10 carbon atoms, or 1 to 5 carbon atoms. The above explanation is applicable to the alkyl group having 1 to 18 carbon atoms. Examples of the aminoalkyl group as a substituent for the N-substituted piperazines include those in which at least one hydrogen atom of the above alkyl group is replaced with an amino group. The number of carbon atoms in the acyl group as a substituent for the N-substituted piperazines includes the number of carbon atoms in the carbonyl group, and may be 2 to 19, 2 to 16, 2 to 11, or 2 to 6. Examples of the N-substituted piperazines include 1-methylpiperazine, 1-(2-aminoethyl)piperazine, 1,4-dimethylpiperazine, and 1,4-bis(3-aminopropyl)piperazine.

### [Water-Soluble Polymer]

In one embodiment of the present disclosure, the polishing composition may comprise a water-soluble polymer. According to one embodiment of the present disclosure, the term "water-soluble" means that the solubility in water (25°C) is 1 g/100 mL or more, and the term "polymer" refers to a (co)polymer having repeating units in the molecular structure thereof and having a weight average molecular weight (Mw) of 1,000 or more.

In one embodiment of the present disclosure, the polishing composition comprises at least one of a heteroatom-containing vinyl polymer or a cellulose derivative. The term "vinyl polymer" is a generic term for polymer compounds obtained by polymerizing monomers having a vinyl group (-CH=CH₂). According to one embodiment of the present disclosure, the vinyl polymer is a heteroatom-containing vinyl polymer. According to one embodiment of the present disclosure, the heteroatom-containing vinyl polymer contains a nitrogen atom. According to one embodiment of the present disclosure, the heteroatom-containing vinyl polymer contains an oxygen atom.

According to one embodiment of the present disclosure, the heteroatom-containing vinyl polymer has an amide bond. The vinyl polymer having an amide bond may be a polymer having an amide bond in the structure of a side chain.

According to one embodiment of the present disclosure, the polymer compound having an amide bond contains a repeating unit represented by the following formula (1): 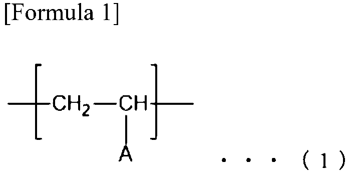
wherein A is a group selected from at least one of the following: 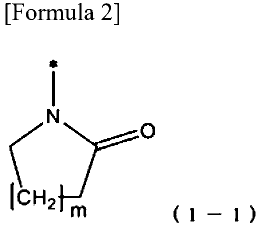
and m is an integer of 1 to 5. In one embodiment of the present disclosure, m is 1, 2, 3, or 4.

In one embodiment of the present disclosure, the polymer compound having an amide bond may have a cyclic amide structure such as polyvinylpyrrolidone, or may have a non-cyclic amide structure such as polyacrylamide or poly-N-vinylacetamide.

In one embodiment of the present disclosure, among the heteroatom-containing vinyl polymer contained in the polishing composition, polyvinylpyrrolidone is 90% by mass or more, 95% by mass or more, 98% by mass or more, 99% by mass or more, 99.5% by mass or more, or 99.9% by mass or more (the upper limit being 100% by mass).

In one embodiment of the present disclosure, the cellulose derivative refers to those in which some of the hydroxy groups possessed by cellulose are substituted with other different substituents. Examples of the cellulose derivative include cellulose derivatives such as hydroxyethyl cellulose (HEC), hydroxypropyl cellulose, hydroxyethyl methyl cellulose, hydroxypropyl methyl cellulose, methyl cellulose, ethyl cellulose, ethyl hydroxyethyl cellulose, and carboxymethyl cellulose, and pullulan.

In one embodiment of the present disclosure, among the cellulose derivative contained in the polishing composition, hydroxyethyl cellulose (HEC) is 90% by mass or more, 95% by mass or more, 98% by mass or more, 99% by mass or more, 99.5% by mass or more, or 99.9% by mass or more (the upper limit being 100% by mass).

In one embodiment of the present disclosure, among the water-soluble polymers contained in the polishing composition, hydroxyethyl cellulose (HEC) is 90% by mass or more, 95% by mass or more, 98% by mass or more, 99% by mass or more, 99.5% by mass or more, or 99.9% by mass or more (the upper limit being 100% by mass).

According to one embodiment of the present disclosure, the weight average molecular weight of the water-soluble polymer (for example, the heteroatom-containing vinyl polymer) is 1,000 or more, 2,000 or more, 4,000 or more, 6,000 or more, 8,000 or more, 10,000 or more, 20,000 or more, 30,000 or more, 40,000 or more, 43,000 or more, or 47,000 or more. According to one embodiment of the present disclosure, the weight average molecular weight of the water-soluble polymer (for example, the heteroatom-containing vinyl polymer) is 90,000 or less, 80,000 or less, 70,000 or less, 60,000 or less, 55,000 or less, or 50,000 or less. According to one embodiment of the present disclosure, the weight average molecular weight of the water-soluble polymer (for example, the heteroatom-containing vinyl polymer) is 1,000 or more and 90,000 or less.

According to one embodiment of the present disclosure, the weight average molecular weight of the water-soluble polymer (for example, the cellulose derivative) is 1,000 or more, 2,000 or more, 4,000 or more, 6,000 or more, 8,000 or more, 10,000 or more, 20,000 or more, 40,000 or more, 43,000 or more, 47,000 or more, 60,000 or more, 90,000 or more, 120,000 or more, 160,000 or more, 200,000 or more, 350,000 or more, 500,000 or more, 800,000 or more, or 1,000,000 or more. In one embodiment of the present disclosure, the weight average molecular weight of the water-soluble polymer (for example, the cellulose derivative) is 2,000,000 or less, 1,500,000 or less, 1,400,000 or less, 1,000,000 or less, 500,000 or less, 400,000 or less, 300,000 or less, 250,000 or less, 200,000 or less, 100,000 or less, 90,000 or less, 80,000 or less, 70,000 or less, 60,000 or less, 50,000 or less, 40,000 or less, 30,000 or less, 20,000 or less, or 10,000 or less. According to one embodiment of the present disclosure, the weight average molecular weight of the water-soluble polymer (for example, the cellulose derivative) is 1,000 or more and 2,000,000 or less.

According to one embodiment of the present disclosure, the molecular weight distribution of the water-soluble polymer contained in the polishing composition is monomodal.

In one embodiment of the present disclosure, the mass concentration of the water-soluble polymer contained in the polishing composition is 1 ppm by mass or more, 2 ppm by mass or more, 4 ppm by mass or more, 6 ppm by mass or more, 8 ppm by mass or more, 10 ppm by mass or more, 12 ppm by mass or more, 14 ppm by mass or more, 16 ppm by mass or more, 18 ppm by mass or more, 30 ppm by mass or more, 40 ppm by mass or more, 60 ppm by mass or more, 90 ppm by mass or more, 120 ppm by mass or more, 150 ppm by mass or more, 180 ppm by mass or more, 210 ppm by mass or more, 240 ppm by mass or more, 270 ppm by mass or more, 300 ppm by mass or more, 330 ppm by mass or more, 360 ppm by mass or more, 390 ppm by mass or more, 420 ppm by mass or more, 450 ppm by mass or more, or 480 ppm by mass or more. In one embodiment of the present disclosure, the mass concentration of the water-soluble polymer contained in the polishing composition is 2000 ppm by mass or less, 1500 ppm by mass or less, 1000 ppm by mass or less, 800 ppm by mass or less, 700 ppm by mass or less, 600 ppm by mass or less, 400 ppm by mass or less, 200 ppm by mass or less, 100 ppm by mass or less, or 80 ppm by mass or less.

In one embodiment of the present disclosure, the mass concentration of the water-soluble polymer contained in the polishing composition is 1 ppm by mass or more and 2000 ppm by mass or less. With such an upper limit, lower limit, or range, the effect that it is possible to provide a novel polishing composition that ensures the polishing removal rate for a film having silicon-silicon bonds such as polysilicon at or above a certain level, increases the ratio of the polishing removal rate for the film having silicon-silicon bonds such as polysilicon to the polishing removal rate for an insulating film such as a film having oxygen-silicon bonds being a function as a stopper layer, and at the same time, can suppress the above-described micro-scratches becomes remarkable.

### [pH]

In one embodiment of the present disclosure, the pH of the polishing composition is 9.0 to 11.5. By the polishing composition having a pH within such a range, there can be provided a novel polishing composition that ensures the polishing removal rate for a film having silicon-silicon bonds such as polysilicon at or above a certain level in order to secure productivity, increases the ratio of the polishing removal rate for the film having silicon-silicon bonds such as polysilicon to the polishing removal rate for an insulating film such as a film having oxygen-silicon bonds being a function as a stopper layer, and at the same time, can suppress the above-described micro-scratches. According to one embodiment of the present disclosure, the pH of the polishing composition is 9.1 or more, 9.2 or more, 9.3 or more, 9.4 or more, 9.5 or more, 9.6 or more, 9.7 or more, 9.8 or more, 9.9 or more, 10.0 or more, 10.1 or more, 10.2 or more, 10.3 or more, or 10.4 or more. According to one embodiment of the present disclosure, the pH of the polishing composition is 11.4 or less, 11.3 or less, 11.2 or less, 11.1 or less, 11.0 or less, 10.9 or less, 10.8 or less, 10.7 or less, or 10.6 or less.

### [Object to be Polished]

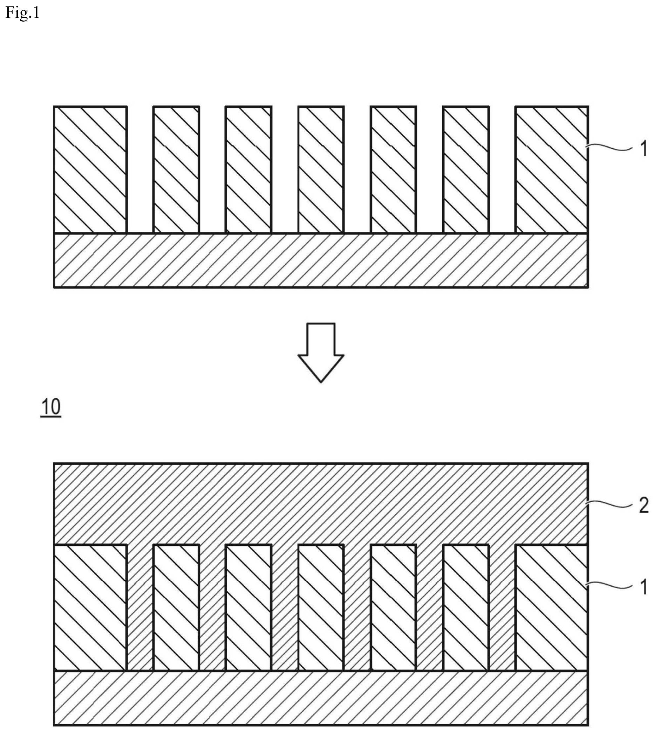

According to one embodiment of the present disclosure, the polishing composition is used in a step of, in an object to be polished having a first layer provided with recesses and a second layer formed so as to be embedded in the recesses, polishing the second layer to expose the first layer, wherein the first layer is selected from the group consisting of a layer having oxygen-silicon bonds and a layer having nitrogen-silicon bonds, and the second layer has silicon-silicon bonds. FIG. 1 is a schematic cross-sectional view of an object to be polished (before polishing). As shown in the upper part of FIG. 1, a first layer 1 (a film having oxygen-silicon bonds or having nitrogen-silicon bonds) is formed on an arbitrary film (for example, a Si substrate) so as to provide recesses. Then, as shown in the lower part of FIG. 1, a second layer 2 (a film having silicon-silicon bonds) is formed so as to be embedded in the recesses, thereby forming an object to be polished 10 including the first layer and the second layer.

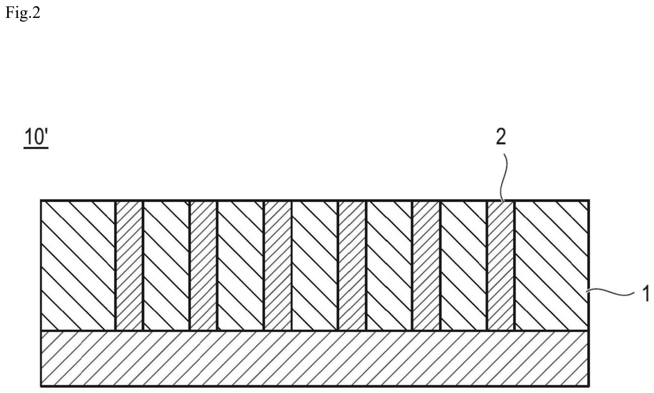

According to one embodiment of the present disclosure, when applying the polishing composition, as shown in FIG. 2, a polished object 10', which is the object to be polished after polishing, has an ideal polished surface in which a function as a stopper layer is achieved by increasing the ratio of the polishing removal rate for a film having silicon-silicon bonds such as polysilicon to the polishing removal rate for an insulating film such as a film having oxygen-silicon bonds, and at the same time, the above-described micro-scratches are suppressed.

In one embodiment of the present disclosure, examples of the object to be polished having oxygen-silicon bonds include TEOS-type silicon oxide (hereinafter, also simply referred to as "TEOS" or "silicon dioxide") that is produced by using tetraethyl orthosilicate as a precursor, HDP (High Density Plasma), USG (Undoped Silicate Glass), PSG (Phosphorus Silicate Glass), BPSG (Boron-Phospho Silicate Glass), and RTO (RaPID Thermal Oxidation). The TEOS film can be formed by plasma CVD.

In one embodiment of the present disclosure, examples of the object to be polished having nitrogen-silicon bonds include a silicon nitride film and SiCN (silicon carbonitride).

In one embodiment of the present disclosure, examples of the object to be polished having silicon-silicon bonds include polysilicon, amorphous silicon, monocrystalline silicon, n-type doped monocrystalline silicon, p-type doped monocrystalline silicon, and Si-based alloys such as SiGe.

### [Polishing Removal Rate]

According to one embodiment of the present disclosure, the polishing composition has a physical property in which the polishing removal rate for the first layer is 4 Å/min or more, 5 Å/min or more, 6 Å/min or more, 7 Å/min or more, 8 Å/min or more, 9 Å/min or more, 10 Å/min or more, 11 Å/min or more, 12 Å/min or more, 13 Å/min or more, 14 Å/min or more, 15 Å/min or more, 20 Å/min or more, 25 Å/min or more, or 29 Å/min or more. According to one embodiment of the present disclosure, the polishing composition has a physical property in which the polishing removal rate for the first layer is 60 Å/min or less, 55 Å/min or less, 50 Å/min or less, 45 Å/min or less, 40 Å/min or less, 35 Å/min or less, 30 Å/min or less, 25 Å/min or less, 20 Å/min or less, 18 Å/min or less, 16 Å/min or less, 14 Å/min or less, 12 Å/min or less, or 11 Å/min or less.

According to one embodiment of the present disclosure, the polishing composition has a physical property in which the polishing removal rate for the second layer is more than 700 Å/min, more than 900 Å/min, 1000 Å/min or more, 1300 Å/min or more, 1600 Å/min or more, 1900 Å/min or more, 2100 Å/min or more, 2200 Å/min or more, 2500 Å/min or more, 2600 Å/min or more, 2700 Å/min or more, 2900 Å/min or more, 3100 Å/min or more, 3150 Å/min or more, 3300 Å/min or more, 3400 Å/min or more, or 3700 Å/min or more. According to one embodiment of the present disclosure, the polishing composition has a physical property in which the polishing removal rate for the second layer is 5000 Å/min or less, 4800 Å/min or less, 4600 Å/min or less, 4400 Å/min or less, 4300 Å/min or less, 4200 Å/min or less, 4100 Å/min or less, 4000 Å/min or less, 3800 Å/min or less, 3600 Å/min or less, 3400 Å/min or less, 3200 Å/min or less, 3100 Å/min or less, or 3000 Å/min or less.

### [Selectivity]

According to one embodiment of the present disclosure, the polishing composition has a physical property in which the ratio of the polishing removal rate (Å/min) of the second layer to the polishing removal rate (Å/min) of the first layer (selectivity) is more than 40, 50 or more, 55 or more, 60 or more, 70 or more, 80 or more, 85 or more, 100 or more, 105 or more, 115 or more, 117 or more, 130 or more, 145 or more, 160 or more, 168 or more, 175 or more, 180 or more, 190 or more, 205 or more, 220 or more, 235 or more, 250 or more, 265 or more, 275 or more, 280 or more, or 285 or more. According to one embodiment of the present disclosure, the polishing composition has a physical property in which the ratio of the polishing removal rate (Å/min) of the second layer to the polishing removal rate (Å/min) of the first layer (selectivity) is 500 or less, 480 or less, 460 or less, 440 or less, 420 or less, 400 or less, 380 or less, 360 or less, 340 or less, 320 or less, 300 or less, 280 or less, 260 or less, 240 or less, 200 or less, 160 or less, or 120 or less. According to one embodiment of the present disclosure, the ratio of the polishing removal rate (Å/min) of the second layer to the polishing removal rate (Å/min) of the first layer (selectivity) is more than 40 and 500 or less.

### [Liquid Carrier]

The polishing composition according to one aspect of the present disclosure comprises a liquid carrier. According to one embodiment of the present disclosure, the liquid carrier (aqueous carrier) comprises water. According to one embodiment of the present disclosure, there is no restriction on the liquid carrier to comprise alcohols such as methanol, ethanol, or ethylene glycol; ketones such as acetone; or the like, but water in the liquid carrier is 90% by mass or more, 95% by mass or more, 98% by mass or more, 99% by mass or more, 99.5% by mass or more, or 99.9% by mass or more (the upper limit being 100% by mass).

### [Antiseptic Agent]

According to one embodiment of the present disclosure, the polishing composition comprises an antiseptic agent.

Since the polishing composition may be an aqueous liquid, microorganisms (bacteria or fungi) can easily proliferate, and the stability during long-term storage or use may be impaired. For this reason, an antiseptic agent may be added, which has a function of suppressing the growth of microorganisms (bacteria or fungi). Examples of the antiseptic agent include isothiazolinone-based antiseptic agents such as 2-methyl-4-isothiazolin-3-one, 5-chloro-2-methyl-4-isothiazolin-3-one, and 1,2-benzisothiazol-3(2H)-one (BIT); p-hydroxybenzoate-based antiseptic agents such as methyl p-hydroxybenzoate (methyl 4-hydroxybenzoate) and ethyl p-hydroxybenzoate (ethyl 4-hydroxybenzoate); and phenoxyethanol. These antiseptic agents may be used alone as one type, or may be used in combination of two or more types.

According to one embodiment of the present disclosure, 0.001 to 1% by mass, 0.005 to 0.5% by mass, or 0.01 to 0.1% by mass of the antiseptic agent may be contained in the polishing composition.

According to one embodiment of the present disclosure, the polishing composition consists essentially of colloidal silica having the number of silanol groups of 2 groups/nm² or more and 6 groups/nm² or less, a nitrogen-containing basic compound, a liquid carrier, and an arbitrary antiseptic agent. According to one embodiment of the present disclosure, the polishing composition consists essentially of colloidal silica having the number of silanol groups of 2 groups/nm² or more and 6 groups/nm² or less, a nitrogen-containing basic compound, at least one of a heteroatom-containing vinyl polymer or a cellulose derivative, and a liquid carrier. In such an embodiment, when the concentration of the colloidal silica is 1.5% by mass, the transmittance when transmitting light having a wavelength of 450 nm may be more than 1.10% and less than 100%, or the colloidal silica may have an average primary particle size of more than 1 nm and less than 55 nm. According to one embodiment of the present disclosure, the polishing composition consists essentially of colloidal silica having the number of silanol groups of 2 groups/nm² or more and 6 groups/nm² or less, a nitrogen-containing basic compound, at least one of a heteroatom-containing vinyl polymer or a cellulose derivative, a liquid carrier, and an antiseptic agent. In such an embodiment, when the concentration of the colloidal silica is 1.5% by mass, the transmittance when transmitting light having a wavelength of 450 nm may be more than 1.10% and less than 100%, or the colloidal silica may have an average primary particle size of more than 1 nm and less than 55 nm. The above explanations are applicable to the descriptions for the colloidal silica having the number of silanol groups of 2 groups/nm² or more and 6 groups/nm² or less, the nitrogen-containing basic compound, the liquid carrier, the heteroatom-containing vinyl polymer, the cellulose derivative, and the antiseptic agent. According to one embodiment of the present disclosure, the polishing composition consists essentially of colloidal silica having the number of silanol groups of 2 groups/nm² or more and 6 groups/nm² or less, TMAH, HEC, a liquid carrier, and an arbitrary antiseptic agent. In such an embodiment, when the concentration of the colloidal silica is 1.5% by mass, the transmittance when transmitting light having a wavelength of 450 nm may be more than 1.10% and less than 100%, or the colloidal silica may have an average primary particle size of more than 1 nm and less than 55 nm. The expression "consist essentially of " described above means that, when the polishing composition comprises a component/components other than the colloidal silica having the number of silanol groups of 2 groups/nm² or more and 6 groups/nm² or less, the nitrogen-containing basic compound (particularly TMAH), at least one of the heteroatom-containing vinyl polymer or the cellulose derivative (particularly HEC), the liquid carrier (particularly water), and the optionally contained antiseptic agent, the ratio thereof (the total ratio thereof) in the polishing composition is 0.1% by mass or less, 0.01% by mass or less, 0.001% by mass or less, or less than 0.0001% by mass.

### [Other Components]

According to one embodiment of the present disclosure, the polishing composition is substantially free of at least one of polyacrylic acid (PAA), polyoxyethylene (POE) lauryl ether, dodecylbenzenesulfonic acid (DBS), or hydrogen peroxide (H₂O₂). According to one embodiment of the present disclosure, the polishing composition is substantially free of polyoxyalkylene alkyl ethers. According to one embodiment of the present disclosure, the polishing composition is substantially free of alkyl aryl sulfonic acids. According to one embodiment of the present disclosure, the polishing composition is substantially free of at least one of a surfactant or an oxidizing agent. The expression "substantially free of" herein means, unless otherwise expressly specified, not comprising the relevant component at all (at or below the detection limit), and also means that the relevant component is 0.1% by mass or less, 0.01% by mass or less, 0.001% by mass or less, or 0.0001% by mass or less in the polishing composition.

The surfactant is a substance having a hydrophilic group and a hydrophobic group. Examples of the surfactant includes an alkyl ether type such as polyoxyethylene lauryl ether and polyoxyethylene oleyl ether; an alkyl phenyl ether type such as polyoxyethylene octyl phenyl ether; an alkyl ester type such as polyoxyethylene laurate; an alkyl amine type such as polyoxyethylene lauryl amino ether; an alkyl amide type such as polyoxyethylene lauric acid amide; a polypropylene glycol ether type such as polyoxyethylene polyoxypropylene ether; an alkanolamide type such as oleic acid diethanolamide; and an allyl phenyl ether type such as polyoxyalkylene allyl phenyl ether. Examples thereof also include nonionic surfactant such as propylene glycol, diethylene glycol, monoethanolamine, alcohol ethoxylates, alkylphenol ethoxylates, tertiary acetylene glycol, and alkanolamides; anionic surfactant such as a carboxylic acid type including sodium myristate, sodium palmitate, sodium stearate, sodium laurate, and potassium laurate; a sulfate ester type including sodium octyl sulfate; a phosphate ester type including lauryl phosphate and sodium lauryl phosphate; and a sulfonic acid type including sodium dioctyl sulfosuccinate and sodium dodecylbenzenesulfonate; cationic surfactant such as amines including laurylamine hydrochloride; and amphoteric surfactant such as lecithin, alkyl amine oxide, alkyl betaines including N-alkyl-N,N-dimethylammonium betaine, and sulfobetaines.

According to one embodiment of the present disclosure, the polishing composition is substantially free of at least one type of surfactant. The "one type" described in this section may refer to one type in the sense of a "genus", such as "surfactant", or may refer to one type in the sense of a "species", such as "polyoxyethylene lauryl ether". The explanation for "substantially free of at least one type" is also applicable to the description for the "an oxidizing agent" and the like.

The oxidizing agent may be a substance having an oxidation reduction potential higher than the oxidation reduction potential of a substrate material at the pH at which polishing is performed. Here, the above-described pH at which polishing is performed is normally the same as the pH of the polishing composition. Note that for the oxidation reduction potential of a substrate material, a value may be employed that is obtained by dispersing powder of the material in water to make a slurry, adjusting the slurry to the same pH as the polishing composition, and then measuring the oxidation reduction potential of the slurry (oxidation reduction potential to a standard hydrogen electrode at a liquid temperature of 25°C) using a commercially available oxidation reduction potential meter. Examples of the oxidizing agent includes hydrogen peroxide, metal oxides, peroxides, nitrates, iodates, periodates, hypochlorites, chlorites, chlorates, perchlorates, persulfates, dichromates, permanganates, organic oxidizing agent, ozone water, and silver (II) salts, and iron (III) salts. According to one embodiment of the present disclosure, the polishing composition is substantially free of at least one type thereof.

According to one embodiment of the present disclosure, the polishing composition is substantially free of abrasive grains other than the colloidal silica (polishing particles).

According to one embodiment of the present disclosure, the polishing composition is substantially free of silica having acidic groups derived from an organic acid (for example, sulfo groups, carboxyl groups, phosphate groups, and the like) immobilized on the surface thereof.

According to one embodiment of the present disclosure, the polishing composition is substantially free of silica having amino groups immobilized on the surface thereof.

According to one embodiment of the present disclosure, the polishing composition comprises none of R¹R²R³R⁴N⁺X⁻, R¹R²R³R⁴P⁺X⁻, R¹R²R³S⁺X⁻, imidazolium salts, and pyridinium salts, wherein R¹, R², R³, and R⁴ are each independently a C₁-C₆ alkyl, a C₇-C₁₂ arylalkyl, or a C₆-C₁₀ aryl, and X⁻ is an anion. The reason for this is that when such cationic agents having a hydrophobic moiety are adsorbed on the surface of the colloidal silica, the surface of the colloidal silica becomes hydrophobic, making it difficult for the colloidal silica to separate from an object to be polished having high water repellency (particularly polysilicon), and the colloidal silica tends to remain as a residue.

According to one embodiment of the present disclosure, the polishing composition comprises none of carrageenan and xanthan gum.

According to one embodiment of the present disclosure, the polishing composition is substantially free of phosphate esters. In the present specification, the expression "substantially free of phosphate esters" means that the polishing composition does not comprise phosphate esters at all (at or below the detection limit), and also means that less than 0.001% by mass of phosphate esters may be contained in the polishing composition.

According to one embodiment of the present disclosure, the polishing composition does not comprise silicone oils having an HLB value of 8 or more at all (at or below the detection limit), or, if contained, comprises less than 1 ppm by mass thereof.

According to one embodiment of the present disclosure, the polishing composition does not comprise basic amino acids at all (at or below the detection limit), or, if contained, comprises less than 0.001% ppm by mass thereof. Examples of the basic amino acids include L-lysine, D-lysine, DL-lysine, L-arginine, D-arginine, DL-arginine, D-histidine, L-histidine, DL-histidine, D-citrulline, L-citrulline, DL-citrulline, D-ornithine, L-ornithine, and DL-ornithine.

According to one embodiment of the present disclosure, the polishing composition does not comprise an alkali metal salt at all (at or below the detection limit), or, if contained, comprises less than 0.001% ppm by mass thereof. Examples of the alkali metal salt include hydroxides of alkali metals. Examples of the alkali metals include potassium, sodium, and lithium.

According to one embodiment of the present disclosure, the polishing composition does not comprise a water-soluble aluminum compound at all (at or below the detection limit), or, if contained, comprises less than 0.01% by mass thereof. The water-soluble aluminum compound may be, for example, sodium aluminate, potassium aluminate, aluminum acetate, aluminum chloride, aluminum sulfate, aluminum hydroxide, and combinations thereof.

In one embodiment of the present disclosure, the polishing composition may be of a single-fluid type or multi-fluid type including double-fluid type. Also, the polishing composition according to one aspect of the present disclosure may, for example, be diluted (typically diluted with water) and used as a polishing solution, or it may be used as is as a polishing solution. That is, the concept of the polishing composition in the technology according to the present disclosure encompasses both a polishing composition (working slurry) that is supplied to an object to be polished and used for polishing the object to be polished, and a concentrated solution (working slurry stock solution) that is diluted and then used for polishing. The concentration magnification of the above-described concentrated solution can be, for example, about 2 times to 100 times on a volume basis.

### <Method for Producing Polishing Composition>

In one embodiment of the present disclosure, a method for producing the polishing composition comprises mixing colloidal silica, a nitrogen-containing basic compound, a liquid carrier, and if necessary, at least one selected from the group consisting of a heteroatom-containing vinyl polymer, a cellulose derivative, and an antiseptic agent. The above explanations are applicable to the explanations for the colloidal silica, the nitrogen-containing basic compound, the liquid carrier, the heteroatom-containing vinyl polymer, the cellulose derivative, and the antiseptic agent. There is no particular restriction on the temperature at which each component is mixed, but it is preferably 10°C or higher and 40°C or lower, and may be heated to increase the rate of dissolution. There is no particular restriction on the mixing time either, as long as uniform mixing can be achieved.

### <Method for Polishing Object to be Polished>

In one embodiment of the present disclosure, a method for polishing an object to be polished comprises a step of, in the object to be polished 10 having the first layer 1 (the layer having oxygen-silicon bonds or having nitrogen-silicon bonds) provided with recesses and the second layer 2 (the layer having silicon-silicon bonds) formed so as to be embedded in the recesses, as shown in FIG. 1, polishing the second layer 2 to expose the first layer 1. In one embodiment of the present disclosure, the method comprises a step of further polishing the first layer after the first layer is exposed. By further comprising such a step, there is a technical effect of completely removing the residue of the object to be polished, which should be polished, such as the film having silicon-silicon bonds including polysilicon.

In one embodiment of the present disclosure, as shown in FIG. 1, the first layer 1 (the layer having oxygen-silicon bonds or the layer having nitrogen-silicon bonds) is formed so as to be provided with recesses on an arbitrary film (for example, a Si substrate). Then, the second layer 2 (the film having silicon-silicon bonds) is formed so as to be embedded in the recesses, and an excessive amount of the second layer 2 is laminated so as to protrude from the recesses of the first layer 1, thereby forming the object to be polished 10 including the first layer 1 and the second layer 2. Such an object to be polished 10 is polished by a polishing apparatus capable of supplying the polishing composition.

In one embodiment of the present disclosure, the polishing apparatus that can be used may be any general polishing apparatus to which a holder that holds a substrate or the like having an object to be polished, a motor whose rotation speed can be changed, and other components are attached, and that have a polishing table to which a polishing pad (polishing cloth) can be pasted. In one embodiment of the present disclosure, as the polishing pad, general non-woven fabrics, polyurethanes, porous fluororesins, and others can be used with no particular restriction. It is preferable that the polishing pad has been grooved to allow the polishing solution to accumulate. In one embodiment of the present disclosure, regarding the polishing conditions, for example, it is preferable that the rotation speeds of the polishing table and the carrier are each independently 10 to 500 rpm. The pressure applied to the substrate having an object to be polished (polishing pressure) is preferably 0.5 to 10 psi. There is no particular restriction on the method for supplying the polishing composition to the polishing pad either, and for example, a method is employed in which the polishing composition is continuously supplied with a pump or the like. There is no restriction on the amount supplied, but it is preferable that the surface of the polishing pad is always covered with the polishing composition disclosed in the present specification.

The present disclosure encompasses the following aspects and embodiments.
1. A polishing composition comprising: colloidal silica having the number of silanol groups of more than 2 groups/nm² and less than 6 groups/nm², a nitrogen-containing basic compound and a liquid carrier and a pH of the polishing composition is 9.0 to 11.5, wherein it is preferred that when a concentration of the colloidal silica is 1.5% by mass, a transmittance when transmitting light having a wavelength of 450 nm is more than 1.10% and less than 100%, and wherein a pH of the polishing composition is 9.0 to 11.5.
2. A polishing composition which consists essentially of colloidal silica having the number of silanol groups of 2 groups/nm² or more and 6 groups/nm² or less, a nitrogen-containing basic compound, at least one of a heteroatom-containing vinyl polymer or a cellulose derivative, and a liquid carrier.
3. A polishing composition which consists essentially of colloidal silica having the number of silanol groups of 2 groups/nm² or more and 6 groups/nm² or less, a nitrogen-containing basic compound, at least one of a heteroatom-containing vinyl polymer or a cellulose derivative, a liquid carrier, and an antiseptic agent.
4. The polishing composition according to any one of 1. to 3., which is used in a step of, in an object to be polished having a first layer provided with recesses and a second layer formed so as to be embedded in the recesses, polishing the second layer to expose the first layer, wherein the first layer has TEOS-type silicon oxide produced by using tetraethyl orthosilicate as a precursor, the second layer has silicon-silicon bonds, and the polishing composition has a physical property in which a ratio of a polishing removal rate (Å/min) of the second layer to a polishing removal rate (Å/min) of the first layer is more than 40.
5. The polishing composition according to any one of 1. to 4., which is used in a step of, in an object to be polished having a first layer provided with recesses and a second layer formed so as to be embedded in the recesses, polishing the second layer to expose the first layer, wherein the first layer is selected from the group consisting of a layer having oxygen-silicon bonds and a layer having nitrogen-silicon bonds, and the second layer has silicon-silicon bonds.
6. The polishing composition according to any one of 1. to 5., wherein a ratio of a polishing removal rate (Å/min) of the second layer to a polishing removal rate (Å/min) of the first layer is more than 40.
7. The polishing composition according to any one of 1. to 6., wherein the colloidal silica has a pulse-NMR specific surface area of more than 40 m²/g.
8. The polishing composition according to any one of 1. to 7., wherein the colloidal silica has an average primary particle size of more than 1 nm and less than 55 nm.
9. The polishing composition according to any one of 1. to 8., which is substantially free of at least one of PAA, POE lauryl ether, DBS, or H₂O₂.
10. The polishing composition according to any one of 1. to 9., which is substantially free of at least one of a surfactant or an oxidizing agent.
11. The polishing composition according to any one of 1. to 10., wherein the nitrogen-containing basic compound comprises at least one selected from the group consisting of a quaternary ammonium salt, an alkanolamine, a nitrogen-containing heterocyclic compound, and ammonia.
12. The polishing composition according to 11., wherein the a nitrogen-containing heterocyclic compound is a saturated nitrogen-containing heterocyclic compound.
13. The polishing composition according to 11. or 12., wherein the nitrogen-containing heterocyclic compound contains only nitrogen atom as a heteroatom.
14. The polishing composition according to any one of 1. to 13., comprising at least one of a heteroatom-containing vinyl polymer or a cellulose derivative.
15. The polishing composition according to any one of 1. to 14., wherein the first layer has TEOS-type silicon oxide produced by using tetraethyl orthosilicate as a precursor, the second layer has silicon-silicon bonds, and the polishing composition has a physical property in which a ratio of a polishing removal rate (Å/min) of the second layer to a polishing removal rate (Å/min) of the first layer is more than 40.
16. The polishing composition according to any one of 1. to 15., wherein a content ratio of the colloidal silica is 0.01% by mass or more and 5% by mass or less, 0.05% by mass or more and 4% by mass or less, 0.1% by mass or more and 3.5% by mass or less, 0.5% by mass or more and 3.4% by mass or less, or 1.0% by mass or more and 3% by mass or less.
17. The polishing composition according to any one of 1. to 16., wherein a content ratio of the colloidal silica is less than 3% by mass.
18. The polishing composition according to any one of 1. to 17., wherein 1) a content ratio of the colloidal silica is 1.3% by mass or more and a concentration of the nitrogen-containing basic compound is 1.0% by mass or less, 2) a content ratio of the colloidal silica is 0.05% by mass or more and a concentration of the nitrogen-containing basic compound is 0.03% by mass or less, or 3) a content ratio of the colloidal silica is 0.6% by mass or more and a concentration of the nitrogen-containing basic compound is 0.4% by mass or less.
19. The polishing composition according to any one of 1. to 18., wherein the transmittance is 20.00% or more and less than 92.87%, 25.00% or more and 55.00% or less, or 30.00% or more and 55.00% or less.
20. The polishing composition according to any one of 1. to 19., wherein the nitrogen-containing basic compound comprises at least one selected from the group consisting of anhydrous piperazine, piperazine hexahydrate, a compound represented by N(R¹)(R²)(R³)(R⁴) (wherein R¹ to R⁴ each independently have 1 or more and 3 or less carbon atoms and a counter anion is a hydroxide ion, a carbonate ion, or a halide ion), and ammonia.
21. The polishing composition according to any one of 1. to 20., wherein the nitrogen-containing basic compound is a quaternary ammonium salt.
22. The polishing composition according to any one of 1. to 21., wherein an amount of the nitrogen-containing basic compound contained in the polishing composition is less than 50 g, 40 g or less, 30 g or less, 25 g or less, 20 g or less, 15 g or less, or 10 g or less per 1 kg of abrasive grains (particularly colloidal silica).
23. The polishing composition according to any one of 1. to 22., wherein an amount of the nitrogen-containing basic compound contained in the polishing composition is 5 g or more, 10 g or more, or 15 g or more per 1 kg of abrasive grains (particularly colloidal silica).
24. The polishing composition according to any one of 1. to 23., wherein a concentration of the nitrogen-containing basic compound in the polishing composition is 0.001% by mass or more and 3.0% by mass or less, 0.005% by mass or more and 0.1% by mass or less, or 0.01% by mass or more and 0.08% by mass or less.
25. The polishing composition according to any one of 1. to 24., comprising at least one selected from the group consisting of cellulose derivatives such as hydroxyethyl cellulose (HEC), hydroxypropyl cellulose, hydroxyethyl methyl cellulose, hydroxypropyl methyl cellulose, methyl cellulose, ethyl cellulose, ethyl hydroxyethyl cellulose, and carboxymethyl cellulose, and pullulan.
26. The polishing composition according to any one of 1. to 25., comprising hydroxyethyl cellulose (HEC).
27. The polishing composition according to any one of 1. to 26., wherein, when a water-soluble polymer contained in the polishing composition is a cellulose derivative, a concentration thereof is 1 ppm by mass or more and 400 ppm by mass or less, 12 ppm by mass or more and 200 ppm by mass or less, or 18 ppm by mass or more and 100 ppm by mass or less.
28. The polishing composition according to any one of 1. to 27., wherein, when a water-soluble polymer contained in the polishing composition is a cellulose derivative, a weight average molecular weight thereof is 200,000 or more and 2,000,000 or less, 500,000 or more and 1,500,000 or less, or 800,000 or more and 1,400,000 or less.
29. The polishing composition according to any one of 1. to 28., wherein, when a water-soluble polymer contained in the polishing composition is a heteroatom-containing vinyl polymer, a concentration thereof is 90 ppm by mass or more and 1000 ppm by mass or less, 240 ppm by mass or more and 800 ppm by mass or less, or 300 ppm by mass or more and 700 ppm by mass or less.
30. The polishing composition according to any one of 1. to 29., wherein, when a water-soluble polymer contained in the polishing composition is a heteroatom-containing vinyl polymer, a weight average molecular weight thereof is 8,000 or more and 90,000 or less, 20,000 or more and 80,000 or less, or 40,000 or more and 60,000 or less.
31. The polishing composition according to any one of 1. to 30., wherein the colloidal silica has the number of silanol groups of more than 3.1 groups/nm².
32. The polishing composition according to any one of 1. to 31., wherein the colloidal silica has the number of silanol groups of more than 4 groups/nm².
33. The polishing composition according to any one of 1. to 32., wherein the pulse-NMR specific surface area is less than 70.5 m²/g.
34. The polishing composition according to any one of 1. to 33., wherein the average primary particle size is 9 nm or more and 53 nm or less, or more than 12 nm and 35 nm or less.
35. The polishing composition according to any one of 1. to 34., wherein the average secondary particle size is 20 nm or more and 100 nm or less, or more than 35 nm and 90 nm or less.
36. The polishing composition according to any one of 1. to 35., wherein the average primary particle size is more than 12 nm.
37. The polishing composition according to any one of 1. to 36., wherein, in a particle size distribution of the colloidal silica determined by a dynamic light scattering method, D90/D10, which is a ratio of a diameter of particles where a cumulative particle mass from a finer particle side reaches 90% of an entire particle mass (D90) to a diameter of particles where the cumulative particle mass reaches 10% of the entire particle mass of entire particles (D10), is 1.1 or more and 3.0 or less, 1.4 or more and 2.7 or less, 1.7 or more and 2.5 or less, or 2.0 or more and 2.3 or less.
38. The polishing composition according to any one of 1. to 37., wherein a ratio of D90/D10 is less than 2.7.
39. The polishing composition according to any one of 1. to 38., wherein the nitrogen-containing basic compound is an organic alkali agent.
40. The polishing composition according to any one of 1. to 39., having a physical property in which a ratio of a polishing removal rate (Å/min) of the second layer to a polishing removal rate (Å/min) of the first layer (selectivity) is more than 40 and 500 or less, 130 or more and 440 or less, or 190 or more and 380 or less.

### Examples

The present disclosure will be described in further detail using the following Examples and Comparative Examples. However, the technical scope of the present disclosure is not restricted to the following Examples alone. Also, in the following, unless otherwise specified, operations were carried out under conditions of room temperature (25°C)/relative humidity of 40 to 50% RH.

### <Production of Polishing Composition>

Polishing compositions were prepared by mixing abrasive grains (colloidal silica), alkali components, water, and in some examples, other components (water-soluble polymers) so as to achieve the compositional features shown in Table 1. For example, the polishing composition of Example 1 has compositional features containing 1.5% by mass of colloidal silica having an average primary particle size of 30 nm, an average secondary particle size of 70 nm, D90/D10 of 2.1, a pulse-NMR specific surface area of 65.7 m²/g, and the number of silanol groups of 5.5 groups/nm², 0.03% by mass of TMAH, and water, and having a pH of 10.5. Note that the symbol "-" in the table indicates that the component is not added. Note that the average secondary particle size of the abrasive grains used in Examples 2 to 5, 7, and 8 and Comparative Examples 1 and 7 to 9 was 70 nm, the average secondary particle size of the abrasive grains used in Example 6 was 35 nm, and the average secondary particle size of the abrasive grains used in Comparative Examples 2 to 6 was 8 nm, 220 nm, 370 nm, 70 nm, and 110 nm, respectively.

### [Method for Calculating particle Size]

The average primary particle size of the abrasive grains was calculated from the specific surface area of the abrasive grains by the BET method measured using "Macsorb (R) HM model-1210" manufactured by Mountech Co., Ltd., and the density of the abrasive grains.

The average secondary particle size of the abrasive grains was measured using the dynamic light scattering particle size and particle size distribution apparatus UPA-UT151 manufactured by MicrotracBEL Corp.

### [Method for Calculating Number of Silanol Groups]

The number of silanol groups per unit surface area of the abrasive grains (unit: groups/nm²) was calculated by measuring or calculating each parameter by the measurement method or calculation method below, and then calculating it by the following method.

More specifically, C in the expression below is the total mass of the abrasive grains, and S in the expression below is the BET specific surface area of the abrasive grains. Still more specifically, first, 1.50 g of the abrasive grains as solid content is collected in a 200 ml beaker, to which 100 ml of pure water is added to form a slurry, after which 30 g of sodium chloride is added and dissolved. Next, 1N hydrochloric acid is added to adjust the pH of the slurry to 3.0 to 3.5, and then pure water is added until the slurry reaches 150 ml.

Using an automatic titrator (COM-1700, manufactured by Hiranuma Sangyo Co., Ltd.), the slurry is adjusted to a pH of 4.0 at 25°C using 0.1N sodium hydroxide, and furthermore, the volume of a 0.1N sodium hydroxide solution V [L] required to raise the pH from 4.0 to 9.0 is measured by pH titration. The average silanol group density (number of silanol groups) can be calculated by the following expression.$ρ = \left(c\times V\times {N}_{A}\right) / \left(C\times S\right)$

In the above expression,
ρ represents the average silanol group density (number of silanol groups) (groups/nm²);
c represents the concentration (mol/L) of the sodium hydroxide solution used for the titration;
V represents the volume (L) of the sodium hydroxide solution required to raise the pH from 4.0 to 9.0;
N_{A} represents the Avogadro constant (/mol);
C represents the total mass (solid content) (g) of the abrasive grains; and
S represents the weighted average value of the BET specific surface area (nm²/g) of the abrasive grains. The BET specific surface area is a value of the specific surface area of the abrasive grains by the BET method measured using "Macsorb (R) HM model-1210" manufactured by Mountech Co., Ltd.

### [Method for Measuring Pulse-NMR Specific Surface Area]

Dispersions were prepared as samples by dispersing abrasive grains (colloidal silica) in water to achieve a concentration of 20% by mass. The results of the specific surface area measured under the following measurement conditions using a pulse-NMR particle interfacial property evaluation apparatus (manufactured by Xigo Nanotools) as the measurement apparatus are shown in Table 1.

### (Measurement Conditions)

Bulk relaxation time: 2409 ms
Specific surface relaxivity: 0.00026
Volume ratio of particle to liquid: 0.1136.

### [Measurement of D90/D10]

The D90 and D10 were measured using the dynamic light scattering particle size and particle size distribution apparatus UPA-UT151 manufactured by MicrotracBEL Corp.

### [Weight Average Molecular Weight]

In the present specification, for the "weight average molecular weight", a value of the weight average molecular weight (in terms of polyethylene glycol) measured by gel permeation chromatography (GPC) can be used. The weight average molecular weight can be measured by the apparatus and conditions below:
GPC apparatus: manufactured by SHIMADZU CORPORATION
Model: Prominence + ELSD detector (ELSD-LTII)
Column: VP-ODS (manufactured by SHIMADZU CORPORATION)
Mobile phase
   A: MeOH
   B: acetic acid 1% aqueous solution
Flow rate: 1 mL/min
Detector: ELSD temp. 40°C, Gain 8, N₂ GAS 350 kPa
Oven temperature: 40°C
Injection volume: 40 µl.

### [Measurement of pH of Polishing Composition]

Using a glass electrode type hydrogen ion concentration meter (model: F-23, manufactured by HORIBA, Ltd.), three-point calibration was performed using standard buffer solutions (phthalate pH buffer solution pH: 4.01 (25°C), neutral phosphate pH buffer solution pH: 6.86 (25°C), and carbonate pH buffer solution pH: 10.01 (25°C)). After that, the glass electrode was placed into the polishing composition, and the value after 2 minutes or longer had passed and the pH had been stabilized was measured as the pH of the polishing composition. The results are shown in Table 1.

### [Measurement of Transmittance of Polishing Composition]

The transmittance of the polishing composition was measured by irradiating the polishing composition with light having a wavelength of 450 nm, using an ultraviolet-visible spectrophotometer (UV-2450, manufactured by Shimadzu Corporation). The results are shown in Table 1.

### [Measurement of Polishing Removal Rate]

Using the polishing compositions, the surfaces of the objects to be polished was polished under the following polishing conditions. Note that, as the objects to be polished, a silicon wafer (300 mm, blanket wafer) having a polysilicon (Poly-Si) film with a thickness of 5000 Å formed on the surface thereof, a silicon wafer (300 mm, blanket wafer) having a P-TEOS film (TEOS film (silicon dioxide film) formed by plasma CVD) with a thickness of 10000 Å formed on the surface thereof, were used.

Note that, since the blanket wafer having the Poly-Si film formed thereon has a natural oxide film of about 5 Å on the surface thereof, the blanket wafer having the Poly-Si film formed thereon was preliminarily polished under the polishing conditions described below using an aqueous dispersion of colloidal silica containing 5% by mass of colloidal silica having an average secondary particle size of 70 nm, thereby removing the natural oxide film, and the resulting wafer was used as the wafer for polishing removal rate measurement.

### (Polishing Conditions)

Polishing apparatus: Reflexion LK, 300 mm CMP single-side polishing apparatus manufactured by Applied Materials, Inc.
Pad: IC1010, a hard polyurethane pad manufactured by Nitta Haas Inc.
Polishing pressure: 2.0 psi (1 psi = 6894.76 Pa, the same applies hereinafter)
Rotation speed of polishing table: 93 rpm
Rotation speed of carrier: 87 rpm
Supply of polishing composition: flowing
Amount of polishing composition supplied: 200 mL/min
Polishing time: 60 seconds

The polishing removal rate was measured by determining the thickness with an optical film thickness measuring instrument (RE-3500: manufactured by SCREEN Semiconductor Solutions Co., Ltd.) and dividing (thickness before polishing) - (thickness after polishing) by the polishing time. The results are shown in Table 1.

In addition, the ratio of the polishing removal rate (Å/min) of the polysilicon film to the polishing removal rate (Å/min) of the P-TEOS film was calculated as the selectivity. The results are shown in Table 1.

### [Measurement of Micro-scratches]

The polished object (TEOS film (silicon dioxide film)) was washed for 12 seconds with a 0.5 mass% hydrofluoric acid solution, and thereafter, using a wafer inspection apparatus "SURFSCAN SP5" manufactured by KLA-Tencor Corporation, the number of scratches with a size of 0.065 µm or more present on the surface of the polished object (TEOS film (silicon dioxide film)) was measured. The results are shown in Table 1.

### REFERENCE SIGNS LIST

1 first layer,
2 second layer,
10 object to be polished,
10' polished object.

**[Table 1]**

| | Abrasive grains | Abrasive grain parameter | | | | Alkali component (pH adjustment) | | Other components | | | pH | Transmittance [%] | Evaluation item | | | |
|---|---|---|---|---|---|---|---|---|---|---|---|---|---|---|---|---|
| | Amount added [wt%] | Number of silanol groups [groups/ nm²] | NMR SA [m²/g] | Average primary particle size [nm] | D90/ D10 | Type | Amount added [mass%] | Type | Molecular weight | Amount added [ppm by mass] | | | Poly-Si polishing removal rate Å/min | TEOS polishing removal rate Å/min | Poly-Si/ TEOS | Scratches on TEOS |
| Ex. 1 | 1.5 | 5.5 | 65.7 | 30 | 2.1 | TMAH | 0.03 | - | - | - | 10.5 | 43.31 | 3500 | 15 | 233 | 38 |
| Ex. 2 | 1.5 | 5.5 | 65.7 | 30 | 2.1 | Piperazine | 0.03 | - | - | - | 10.5 | 43.41 | 4000 | 20 | 200 | 43 |
| Ex. 3 | 1.5 | 5.5 | 65.7 | 30 | 2.1 | Ammonia | 0.01 | - | - | - | 10.5 | 43.56 | 3150 | 30 | 105 | 49 |
| Ex. 4 | 1.5 | 5.5 | 65.7 | 30 | 2.1 | TMAH | 0.03 | HEC | 1,200,000 | 50 | 10.5 | 37.29 | 2900 | 10 | 290 | 23 |
| Ex. 5 | 1.5 | 5.5 | 65.7 | 30 | 2.1 | TMAH | 0.03 | PVP | 45,000 | 500 | 10.5 | 40.68 | 3300 | 12 | 275 | 34 |
| Ex. 6 | 1.5 | 3.1 | 70.5 | 12 | 2.7 | TMAH | 0.03 | - | - | - | 10.5 | 92.87 | 2600 | 10 | 260 | 35 |
| Ex. 7 | 1.5 | 5.5 | 65.7 | 30 | 2.1 | N,N-Dimethylethanolamine | 0.03 | HEC | 1,200,000 | 50 | 10.5 | 29.29 | 3900 | 23 | 170 | 68 |
| Ex. 8 | 1.5 | 5.5 | 65.7 | 30 | 2.1 | 1-(2-Aminoethyl)piperazine | 0.03 | HEC | 1,200,000 | 50 | 10.5 | 30.06 | 3750 | 18 | 208 | 77 |
| Comp. 1 | 1.5 | 5.5 | 65.7 | 30 | 2.1 | KOH | 0.05 | - | - | - | 10.5 | 27.55 | 2200 | 60 | 37 | 235 |
| Comp. 2 | 1.5 | 1.8 | 89.5 | 6 | 4.3 | TMAH | 0.03 | - | - | - | 10.5 | 97.12 | 900 | 5 | 180 | 43 |
| Comp. 3 | 1.5 | 7.9 | 23.8 | 90 | 2.6 | TMAH | 0.03 | - | - | - | 10.5 | 0.26 | 4200 | 25 | 168 | 575 |
| Comp. 4 | 1.5 | 23.8 | 21.9 | 220 | 2.6 | TMAH | 0.03 | - | - | - | 10.5 | 0.03 | 4300 | 45 | 96 | 762 |
| Comp. 5 | 1.5 | 1.6 | 35.2 | 30 | 2.1 | TMAH | 0.03 | - | - | - | 10.5 | 43.09 | 2100 | 20 | 105 | 433 |
| Comp. 6 | 1.5 | 5.9 | 36.6 | 55 | 1.8 | TMAH | 0.03 | - | - | - | 10.5 | 1.10 | 4100 | 35 | 117 | 297 |
| Comp. 7 | 1.5 | 5.5 | 65.7 | 30 | 2.1 | TMAH | 0.01 | - | - | - | 8.0 | 41.21 | 700 | 45 | 16 | 58 |
| Comp. 8 | 1.5 | 5.5 | 65.7 | 30 | 2.1 | KOH | 0.05 | HEC | 1,200,000 | 50 | 10.5 | 22.83 | 2700 | 75 | 36 | 183 |
| Comp. 9 | 1.5 | 5.5 | 65.7 | 30 | 2.1 | TMAH | 0.1 | - | - | - | 12.0 | 18.95 | 2100 | 35 | 60 | 933 |

| | | | | | | | | | | | | | | | | |
|---|---|---|---|---|---|---|---|---|---|---|---|---|---|---|---|---|
| Ex.: Example Comp.: Comparative Example TMAH: Tetramethylammonium hydroxide Piperazine: Anhydrous piperazine HEC: Hydroxyethyl cellulose PVP: Polyvinylpyrrolidone | | | | | | | | | | | | | | | | |

### <Discussion>

According to the polishing compositions of Examples, it is shown that the polishing removal rate for the film having silicon-silicon bonds such as polysilicon can be ensured at or above a certain level, the ratio of the polishing removal rate for the film having silicon-silicon bonds such as polysilicon to the polishing removal rate for the insulating film such as a film having oxygen-silicon bonds can be increased being a function as a stopper layer, and at the same time, the above-described micro-scratches can be suppressed.

Examples 1 to 3 are examples in which TMAH, piperazine, and ammonia were respectively used as the nitrogen-containing basic compound contained in the polishing composition. As a result, from the viewpoint of the selectivity as well as from the viewpoint of micro-scratches, it can be suggested that TMAH is the most excellent as the nitrogen-containing basic compound.

Example 4 is an example in which HEC was further added to the polishing composition of Example 1. By further adding HEC to the polishing composition of Example 1, the selectivity was significantly improved, and the number of micro-scratches could also be remarkably reduced.

Example 5 is an example in which PVP was further added to the polishing composition of Example 1. By further adding PVP to the polishing composition of Example 1, the selectivity was improved and the number of micro-scratches could also be reduced compared to Example 1; however, the results were not as significant as those shown in Example 4.

Example 6 is an example in which the type of abrasive grains contained in the polishing composition of Example 1 was changed. According to the polishing composition of Example 6, compared to the polishing composition of Example 1, the selectivity was improved and the number of micro-scratches could also be slightly reduced; however, the polishing removal rate for polysilicon became the slowest among Examples. Therefore, in consideration of productivity, regarding the abrasive grains contained in the polishing composition, it is suggested that the number of silanol groups of the abrasive grains is preferably more than 3.1 groups/nm², the pulse-NMR specific surface area is preferably less than 70.5 m²/g, the average primary particle size is preferably more than 12 nm, the average secondary particle size is preferably more than 35 nm, and the ratio of D90/D10 is preferably less than 2.7. It is also suggested that the transmittance of the polishing composition is preferably less than 92.87%.

Examples 7 and 8 are examples in which TMAH, as the nitrogen-containing basic compound contained in the polishing composition of Example 4, was changed to N,N-dimethylethanolamine and 1-(2-aminoethyl)piperazine, respectively. As a result, due to the influence of N,N-dimethylethanolamine and 1-(2-aminoethyl)piperazine present in the polishing composition, the abrasive grains likely slightly aggregated, and in both examples, the number of micro-scratches increased. Therefore, even if HEC is further added to the polishing composition, this alone does not remarkably suppress the occurrence of micro-scratches as in Example 4, suggesting that it is important to use TMAH as the nitrogen-containing basic compound.

As described above, Example 4 yielded the best results among all Examples.

Comparative Example 1 is an example in which the polishing composition of Example 1 was used as the base but the alkali component was changed to KOH. As a result, due to the influence of KOH present in the polishing composition, the abrasive grains slightly aggregated, and the polishing removal rate of TEOS increased. Due to this, the selectivity decreased, and the number of micro-scratches significantly increased. From these results, it is suggested that if the polishing composition does not comprise the nitrogen-containing basic compound, the technical problem of the present disclosure cannot be solved.

Comparative Examples 2 to 5 are examples in which the type of abrasive grains contained in the polishing composition of Example 1 was changed. From these results, it is suggested that if the number of silanol groups is 2 groups/nm² or less, or if the number of silanol groups is 6 groups/nm² or more, the technical problem of the present disclosure cannot be solved.

Comparative Example 6 is an example in which the type of abrasive grains contained in the polishing composition of Example 1 was changed, thereby adjusting the transmittance of the polishing composition to 1.10%. When polishing was performed using such a polishing composition, the number of micro-scratches remarkably increased. Therefore, it is suggested that the use of a polishing composition in which, if the concentration of colloidal silica is 1.5% by mass, the transmittance when transmitting light having a wavelength of 450 nm is 1.10% or less cannot solve the technical problem of the present disclosure.

Comparative Example 7 is an example in which the pH of the polishing composition was adjusted to 8.0 by adjusting the amount of TMAH as the nitrogen-containing basic compound contained in the polishing composition of Example 1. As a result, the polishing removal rate for polysilicon did not increase, whereas the polishing removal rate for TEOS increased, and the selectivity could not be increased. Also, Comparative Example 9 is an example in which the pH of the polishing composition was adjusted to 12.0 by adjusting the amount of TMAH as the nitrogen-containing basic compound contained in the polishing composition of Example 1. As a result, the polishing removal rate for polysilicon did not increase, the selectivity could not be increased, and a very large number of micro-scratches were generated. This is presumed to be because, at a high pH of the polishing composition, the particle surface of the silica particles was dissolved, causing significant aggregation. From the above results of Comparative Examples 7 and 9, it is suggested that if the pH of the polishing composition is less than 9.0 or more than 11.5, the technical problem of the present disclosure cannot be solved.

Comparative Example 8 is an example in which HEC was added to the polishing composition of Comparative Example 1. As a result, even with the addition of HEC, the results were the same as those of Comparative Example 1. From these results as well, it is suggested that if the polishing composition does not comprise the nitrogen-containing basic compound, the technical problem of the present disclosure cannot be solved.

The present application is based on Japanese Patent Application No. 2025-056440 filed on March 28, 2025, and the contents disclosed therein are incorporated herein by reference in their entirety.

## Claims

1. A polishing composition comprising:
colloidal silica having the number of silanol groups of more than 2 groups/nm² and less than 6 groups/nm²;
a nitrogen-containing basic compound; and
a liquid carrier,
wherein, when a concentration of the colloidal silica is 1.5% by mass, a transmittance when transmitting light having a wavelength of 450 nm is more than 1.10% and less than 100%, and
the polishing composition has a pH of 9.0 to 11.5.

2. The polishing composition according to claim 1, which is used in a step of, in an object to be polished having a first layer provided with recesses and a second layer formed so as to be embedded in the recesses, polishing the second layer to expose the first layer, wherein the first layer is selected from the group consisting of a layer having oxygen-silicon bonds and a layer having nitrogen-silicon bonds, and the second layer has silicon-silicon bonds.

3. The polishing composition according to claim 2, having a physical property in which a ratio of a polishing removal rate (Å/min) of the second layer to a polishing removal rate (Å/min) of the first layer is more than 40.

4. The polishing composition according to claim 1, wherein the colloidal silica has a pulse-NMR specific surface area of more than 40 m²/g.

5. The polishing composition according to claim 1, wherein the colloidal silica has an average primary particle size of more than 1 nm and less than 55 nm.

6. The polishing composition according to claim 1, which is substantially free of at least one of PAA, POE lauryl ether, DBS, or H₂O₂.

7. The polishing composition according to claim 1, which is substantially free of at least one of a surfactant or an oxidizing agent.

8. The polishing composition according to claim 1, wherein the nitrogen-containing basic compound comprises at least one selected from the group consisting of a quaternary ammonium salt, an alkanolamine, a nitrogen-containing heterocyclic compound, and ammonia.

9. The polishing composition according to claim 8, wherein the nitrogen-containing heterocyclic compound is a saturated nitrogen-containing heterocyclic compound.

10. The polishing composition according to claim 8, wherein the nitrogen-containing heterocyclic compound contains only nitrogen atom as a heteroatom.

11. The polishing composition according to claim 1, comprising at least one of a heteroatom-containing vinyl polymer or a cellulose derivative.

12. A polishing composition which consists essentially of colloidal silica having the number of silanol groups of 2 groups/nm² or more and 6 groups/nm² or less, a nitrogen-containing basic compound, at least one of a heteroatom-containing vinyl polymer or a cellulose derivative, and a liquid carrier.

13. A polishing composition which consists essentially of colloidal silica having the number of silanol groups of 2 groups/nm² or more and 6 groups/nm² or less, a nitrogen-containing basic compound, at least one of a heteroatom-containing vinyl polymer or a cellulose derivative, a liquid carrier, and an antiseptic agent.
